# FASCICULE DE BREVET EUROPEEN

(11) **EP 3 947 077 B1**
(45) Date de publication et mention de la délivrance du brevet: **23.07.2025**
(21) Numéro de dépôt: 20716403.9
(22) Date de dépôt: 20.03.2020
(51) Int. Cl.: B60K 35/28, B60W 30/12, B60W 30/18, G08G 1/16

(54) **PROCÉDÉ DE COMMANDE DU POSITIONNEMENT D'UN VÉHICULE AUTOMOBILE SUR UNE VOIE DE CIRCULATION**
VERFAHREN ZUR STEUERUNG DER POSITIONIERUNG EINES KRAFTFAHRZEUGES AUF EINER VERKEHRSSPUR
METHOD FOR CONTROLLING THE POSITIONING OF A MOTOR VEHICLE ON A TRAFFIC LANE

(30) Priorité: 28.03.2019 FR 1903280
(43) Date de publication de la demande: 09.02.2022
(73) Titulaire: Ampere SAS, 92100 Boulogne-Billancourt (FR); NISSAN MOTOR Co., Ltd., Yokohama-shi, Kanagawa 221-0023 (JP)
(72) Inventeur: CANDAS, Christophe, 27940 Aubevoye (FR); KUNC, Jérôme, 27950 La Chapelle Longueville (FR)
(74) Mandataire: Renault Group
(86) Numéro de dépôt international: PCT/EP2020/057885
(87) Numéro de publication internationale: WO 2020/193438

(56) Documents cités:
- EP-A1- 3 360 746
- DE-A1- 102017 010 491
- US-A1- 2015 151 725
- US-A1- 2018 118 264

## Description

L'invention concerne un procédé et un dispositif de commande du positionnement d'un véhicule automobile dans une voie de circulation. L'invention trouve une application particulièrement avantageuse dans la réalisation de systèmes de gestion du niveau d'autonomie des véhicules automobiles à conduite autonome, pour lesquels il est primordial de pouvoir contrôler avec fiabilité le positionnement du véhicule dans son environnement.

La problématique de positionner un véhicule dans sa voie de circulation, est aujourd'hui au cœur des premiers niveaux d'autonomie des véhicules permettant des phases de conduite autonome, c'est-à-dire pendant lesquelles ils sont conduits de façon automatisée, sans que le conducteur n'agisse sur le volant ou les pédales. En particulier, sur autoroute et/ou sur voies rapides (chaussées séparées par un terre-plein central), en mode autonome ou semi-autonome, une stratégie actuelle de contrôle du positionnement latéral du véhicule dans sa voie de circulation consiste à positionner le véhicule sensiblement en milieu de voie. En situation réelle de conduite, cette stratégie peut engendrer une certaine anxiété du point de vue du conducteur. En effet, sur une route comprenant plusieurs voies de circulation, lorsqu'un véhicule en phase de conduite autonome se déplaçant d'amont en aval selon le sens de circulation, est positionné sur la voie la plus à gauche pour un observateur tourné vers l'aval, par exemple dans le cas d'un dépassement de véhicule, le véhicule en phase de conduite autonome peut alors sembler trop proche du véhicule dépassé pour l'usager du véhicule autonome, surtout si le véhicule dépassé louvoie dans sa voie. De la même manière, lorsque le véhicule en phase de conduite autonome est positionné sur la voie la plus à droite par rapport au même observateur et qu'il subit un dépassement par un autre véhicule, l'usager du véhicule autonome peut également ressentir une proximité trop grande avec cet autre véhicule.

On connaît du document US8473144 un système de contrôle du positionnement latéral d'un véhicule sur sa voie de circulation, qui est basé sur l'identification des véhicules environnants. Plus précisément, le système est conçu pour identifier des objets à proximité du véhicule et, pour chaque objet identifié, estimer un intervalle de temps pendant lequel le véhicule et l'objet seront latéralement adjacents, en fonction notamment des vitesses et directions de mouvement respectives du véhicule et de l'objet, et ajuster la trajectoire du véhicule en prenant en compte une distance latérale de sécurité à maintenir entre le véhicule et l'objet identifié pendant ledit intervalle de temps. Cependant, cette solution entraîne des louvoiements permanents du véhicule pour maintenir la distance latérale de sécurité. En particulier, sur des portions de route où le trafic est dense, le véhicule peut être soumis à de nombreux ajustements de trajectoires, ce qui a pour conséquence de faire osciller le véhicule, ce qui peut également être source d'anxiété pour le conducteur. En outre, ce système est entièrement basé sur la détection d'objets se déplaçant à proximité du véhicule. De plus, mise à part la position du véhicule, il est nécessaire de mesurer sa vitesse ainsi que plusieurs autres paramètres, comme par exemple l'accélération ou la décélération du véhicule. Ce système est donc relativement complexe à mettre en œuvre. Le document DE102017010491 décrit un système qui ne surmonte que partiellement ces inconvénients.

L'invention a pour but de proposer un procédé de commande du positionnement d'un véhicule autonome dans sa voie de circulation qui soit plus en adéquation avec les besoins notamment de sécurité et de sérénité des usagers en situation réelle de conduite, en particulier en présence d'autres véhicules susceptibles de se retrouver latéralement adjacents avec le véhicule autonome, et qui soit simple à mettre en œuvre.

A cette fin, l'invention concerne un procédé de commande du positionnement d'un véhicule automobile circulant sur une route comprenant plusieurs voies de circulation délimitées latéralement par des lignes de marquage au sol, caractérisé en ce qu'il comprend les étapes suivantes :
recevoir un signal issu d'au moins une caméra équipant le véhicule,
analyser ledit signal généré par la caméra pour détecter lesdites lignes de marquage au sol,
identifier, selon une classification prédéfinie des types de lignes de marquage au sol, le type des lignes de marquage au sol détectées qui délimitent latéralement la voie de circulation courante du véhicule,
déterminer des caractéristiques de la voie de circulation courante du véhicule en fonction de l'identification du type des lignes de marquage au sol qui la délimitent et,
si la voie de circulation a pour caractéristique d'être parmi au moins une voie de circulation la plus à gauche et une voie de circulation la plus à droite pour un observateur tourné selon le sens de circulation du véhicule,
commander le positionnement du véhicule dans sa voie de circulation courante de manière à décaler le véhicule en direction du bord distal de la route par rapport à l'axe central de la voie de circulation du véhicule. Le procédé comprend en outre une étape consistant à maintenir une distance de décalage entre le véhicule et la ligne de marquage au sol détectée et située du côté distal de la route, le procédé étant caractérisé en ce que ladite distance de décalage est paramétrable en fonction de la vitesse du véhicule.

Grâce à cette approche, il est possible de contrôler le positionnement latéral du véhicule dans sa voie de circulation en adoptant un positionnement approprié dans la voie et en conservant une même trajectoire à suivre pour le véhicule, quels que soient les objets présents dans l'environnement du véhicule, en particulier les autre véhicules en mouvement à proximité. De plus, le procédé de l'invention ne nécessite que l'utilisation d'une caméra, qui est déjà présente sur la plupart des véhicules, et dont l'exploitation des signaux pour la mise en œuvre du procédé est purement algorithmique, ce qui est particulièrement avantageux en termes de simplicité de mise en œuvre et de coût.

Avantageusement, si la voie de circulation courante a pour caractéristique d'être une voie de circulation centrale, le procédé comprend une étape de commander le positionnement du véhicule dans sa voie de circulation de manière à centrer le véhicule par rapport à l'axe central de la voie de circulation du véhicule.

Avantageusement, ladite distance de décalage est diminuée à basses vitesses, de préférence pour des vitesses du véhicule inférieures ou égales à environ 20 m/s.

De préférence, ladite distance de décalage est égale à une fraction d'une distance de sécurité définie par la différence entre la largeur de la voie de circulation courante du véhicule et la largeur du véhicule.

Avantageusement, la largeur de la voie de circulation courante du véhicule est déterminée en fonction de la position relative des lignes de marquage au sol détectées qui délimitent latéralement la voie de circulation du véhicule.

Avantageusement, la classification prédéfinie des types de lignes de marquage au sol inclut des informations sur la nature continue ou discontinue des traits constituant les lignes de marquage au sol, sur la longueur des traits et sur l'intervalle entre les traits.

L'invention concerne également un dispositif de commande du positionnement d'un véhicule automobile circulant sur une route comprenant plusieurs voies de circulation délimitées latéralement par des lignes de marquage au sol, caractérisé en ce qu'il comprend une interface d'entrée adaptée à être couplée à au moins une caméra équipant le véhicule et au moins une unité de traitement adaptée à mettre en œuvre les étapes du procédé tel que décrit ci-dessus.

L'invention concerne également un véhicule automobile caractérisé en ce qu'il comprend au moins une caméra et un dispositif tel que décrit ci-dessus.

D'autres caractéristiques et avantages de l'invention ressortiront de la description qui en est faite ci-après, à titre indicatif et nullement limitatif, en référence aux dessins annexés, dans lesquels :
[Fig. 1] illustre de façon schématique un exemple de mise en œuvre du procédé de commande pour le positionnement d'un véhicule sur sa voie de circulation, pour différents cas de figure ;
[Fig. 2] illustre de façon schématique un exemple de différents types de lignes de marquage au sol susceptibles de délimiter latéralement les voies de circulation ;
[Fig. 3] illustre de façon schématique le dispositif de commande selon l'invention
[Fig. 4] illustre un exemple de décalage du véhicule dans une voie de circulation en fonction de la vitesse du véhicule.

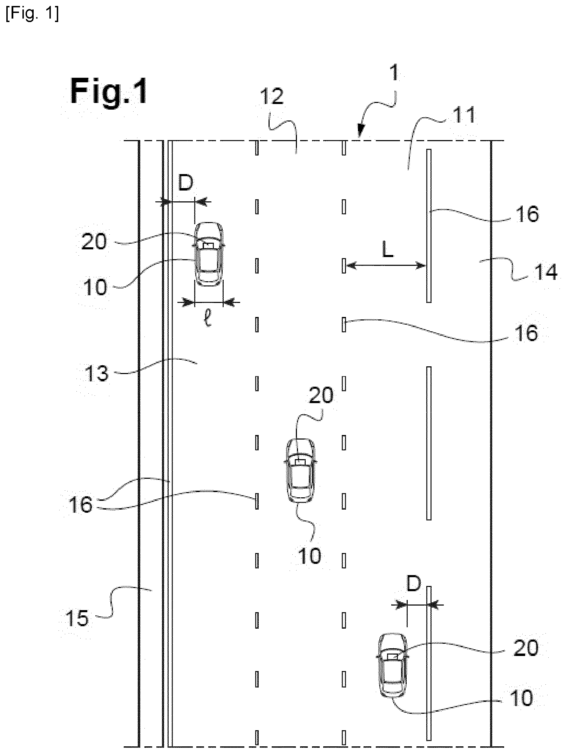

On a représenté sur la figure 1 une partie d'une route 1 comprenant selon cet exemple trois voies de circulation, respectivement une voie située la plus à droite, dite voie de droite11, une voie centrale 12 et une voie située la plus à gauche, dite voie de gauche 13, la voie de droite 11 étant située sur la rive droite de la voie centrale 12 par rapport à un observateur tourné vers l'aval selon le sens de circulation et la voie de gauche 13 étant située sur la rive gauche de la voie centrale 12 par rapport au même observateur, et sur lesquelles est susceptible de circuler un véhicule 10 se déplaçant d'amont en aval. La route 1 à trois voies de circulation selon l'exemple de la figure 1 est délimitée latéralement par deux bords distaux opposés, respectivement un bord distal constitué par une bande d'arrêt d'urgence 14, qui est située sur la rive droite de la voie de droite 11 et par un bord distal constitué par un terre plein central 15, qui est situé sur la rive gauche de la voie de gauche 13. Par ailleurs, chacune des voies de circulation 11, 12 et 13 de la route 1 est délimitée latéralement à droite et à gauche par des lignes de marquage au sol 16.

On part du constat que, selon le type des lignes de marquage au sol qui délimitent chaque voie de circulation, il est possible de déterminer dans quelle voie de circulation précisément est placé le véhicule. A partir de cette information, on fournira, comme il sera expliqué plus en détail par la suite, le décalage approprié permettant de décaler plus ou moins le véhicule dans sa voie, de façon à garantir un positionnement du véhicule propre à favoriser l'acceptabilité du mode autonome par l'utilisateur et ce, quels que soient les objets présents dans l'environnement du véhicule.

L'invention prévoit donc de détecter les lignes de marquage au sol qui sont disposées latéralement de part et d'autre de chacune des voies de circulation pour déterminer, à partir d'une identification de ces lignes de marquage au sol détectées, sur quelle voie de circulation précisément est placé le véhicule. Pour ce faire, on équipe le véhicule 10 avec une caméra 20, par exemple placée vers l'avant du véhicule. Dans ce cas, elle est de préférence disposée en haut du pare-brise, au niveau de la jonction avec le toit du véhicule, de façon à permettre d'observer la scène située devant le véhicule. On pourra avantageusement utiliser la caméra frontale installée sur le pare-brise du véhicule avec les capacités de traitement d'image associé, comme utilisés par exemple par les systèmes de détection d'obstacles équipant certains véhicules et servant au contrôle latéral du véhicule, tel que le système Mobileye^{®}.

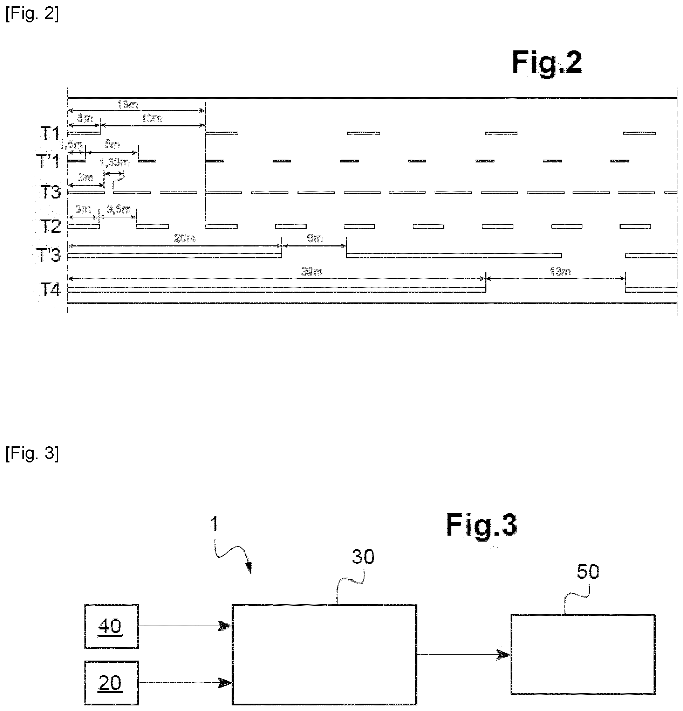

La figure 2 illustre une classification des différents types de lignes de marquage au sol susceptibles de délimiter latéralement des voies de circulation. Les caractéristiques spécifiques permettant de distinguer les différents types connus de lignes de marquage au sol concernent en particulier la nature continue ou discontinue des traits constituant ces lignes, la longueur des traits, ainsi que l'intervalle entre eux. Ainsi, pour une voie de circulation la plus à gauche, située du côté d'un terre-plein central délimitant les deux sens de circulation d'une route, la ligne de marquage au sol délimitant latéralement cette voie du terre plein central adjacent peut être par exemple soit une ligne constituée par des traits discontinus présentant chacun une longueur de 3m et un intervalle régulier entre eux de 10m, telle que la ligne T1 de la figure 2, soit une ligne en traits continus. Pour une voie centrale, la ligne de marquage au sol délimitant cette voie de chaque côté peut par exemple être constituée d'une ligne discontinue telle que la ligne T1, T'1 ou T3 illustrée à la figure 2. Enfin, pour une voie de circulation la plus à droite, située du côté d'une bande d'arrête d'urgence, la ligne de marquage au sol délimitant latéralement cette voie de la bande d'arrêt d'urgence peut par exemple être constituée d'une ligne discontinue telle que la ligne T2, T'3 ou T4 illustrée à la figure 2. Autrement dit, la classification permet de déterminer une voie de circulation parmi une voie de gauche, une voie centrale ou une voie de droite, en fonction des caractéristiques spécifiques des différents types de lignes de marquage au sol.

Ainsi, à partir du signal généré par la caméra embarqué à l'avant du véhicule, on identifie au moyen d'algorithmes de traitement d'image associés à la caméra connus en soi, le type de lignes de marquage au sol situées à droite et à gauche du véhicule et, à partir de la classification des types de lignes de marquage au sol, on détermine sur quelle voie est placé le véhicule, parmi la voie de gauche, la voie centrale ou la voie de droite.

Egalement, en fonction de la position des lignes de marquage au sol détectées par la caméra de chaque côté du véhicule, on détermine la largeur L de la voie sur laquelle est placée le véhicule. A partir de la largeur de voie ainsi déterminée, on calcule une distance de sécurité, qui sera utilisée pour positionner le véhicule dans sa voie de circulation comme il sera expliqué en détail ci-après. Cette distance de sécurité est préférentiellement définie comme étant la différence entre la largeur de voie L déterminée à partir du signal généré par la caméra et la largeur du véhicule I, qui est une information connue par le système. Cette information de distance de sécurité, ainsi que l'information sur la voie de circulation du véhicule déterminée à l'étape précédente à partir du signal généré par la caméra, vont ensuite être exploitées pour commander le positionnement du véhicule dans sa voie de circulation.

La figure 3 représente un dispositif comportant des moyens adaptés à la mise en œuvre du procédé selon un mode de réalisation de l'invention. Le dispositif 1 comprend une première unité de traitement 30, qui reçoit les signaux d'image de la caméra 20 et est adaptée à exécuter un traitement d'image pour la reconnaissance et l'identification des types de lignes de marquage au sol. Ce traitement d'image permet d'en déduire comme expliqué précédemment la voie de circulation sur laquelle est placé le véhicule, ainsi que la largeur de cette voie de circulation et partant, la distance de sécurité. La première unité de traitement 30 reçoit également des signaux fournis par un capteur 40 adapté à mesurer la vitesse du véhicule. La première unité de traitement 30 peut par exemple être le calculateur utilisé dans le système embarqué d'assistance à la conduite, appelé communément ADAS (acronyme pour Advanced Driver Assistance System, en langue anglaise), équipant le véhicule.

De façon générale, s'il ressort de l'exploitation des signaux d'image et de l'identification des types de lignes de marquage au sol que le véhicule est placé sur la voie de circulation la plus à gauche ou la voie de circulation la plus à droite de la route, alors la première unité de traitement 30 est adaptée pour commander le positionnement du véhicule dans la voie, de manière à décaler le véhicule en direction du bord distal de la route par rapport à l'axe central de la voie. Dans ce cas, le positionnement du véhicule dans sa voie est commandé de façon à décentrer le véhicule dans sa voie en maintenant sensiblement constante une distance de décalage entre le véhicule et la ligne de marquage au sol qui est située du côté du bord distal de la route, cette distance de décalage étant préférentiellement égale à une fraction de la distance de sécurité précédemment calculée.

Par contre, si la voie de circulation sur laquelle est placé le véhicule est déterminée comme étant la voie de circulation centrale, alors la première unité de traitement 30 est adaptée pour commander le positionnement du véhicule de manière à centrer le véhicule dans la voie de circulation.

Pour commander le positionnement du véhicule, la première unité de traitement 30 coopère avec une deuxième unité de traitement 50, qui est par exemple le calculateur en charge de la direction d'assistance électrique du véhicule. Ce dernier reçoit des ordres de commande issus de la première unité de traitement 30 pour agir sur la direction du véhicule de façon à décaler ou centrer le véhicule dans sa voie de circulation, selon les cas de figures évoqués ci-dessus.

Ainsi, suivant l'exemple de la figure 1, dans le cas où le véhicule 10 circule sur la voie de droite 11, on commande le positionnement du véhicule de manière à décentrer le véhicule dans la voie 11 en direction du bord distal de la route, constitué ici par la bande d'arrêt d'urgence 14 et à maintenir le véhicule à une distance de décalage D par rapport à la ligne de marquage au sol 16 situé du côté de la bande d'arrêt d'urgence 14, la distance de décalage D étant par exemple choisie égale à 1/3 de la distance de sécurité. Dans ce cas, la distance entre le véhicule 10 et la ligne de marquage au sol 16 opposée, délimitant la voie de droite 11 par rapport à la voie centrale adjacente 12, est maintenue à 2/3 de la distance de sécurité.

De la même façon, dans le cas où le véhicule 10 circule sur la voie de gauche 13, on commande le positionnement du véhicule de manière à décentrer le véhicule dans la voie 11 en direction du bord distal de la route, constitué ici par le terre-plein central 15 et à maintenir le véhicule à une distance de décalage D, par exemple choisie égale à 1/3 de la distance de sécurité, par rapport à la ligne de marquage au sol 16 situé du côté du terre-plein central 15. Ainsi, la distance entre le véhicule 10 et la ligne de marquage au sol 16 opposée, délimitant la voie de gauche 13 par rapport à la voie centrale adjacente 12, est maintenue à 2/3 de la distance de sécurité.

Enfin, si le véhicule circule sur la voie centrale 12, on commande le positionnement de manière à placer le véhicule au centre de la voie et à maintenir le véhicule à une distance de décalage D correspondant à la moitié de la distance de sécurité par rapport à chacune des lignes de marquage au sol 16 délimitant de chaque côté la voie de circulation centrale 12.

Cette stratégie permet d'ajuster le positionnement du véhicule dans sa voie de circulation, de façon indépendante des autres véhicules se déplaçant à proximité, ce qui permet une conduite souple sans trop de variations de trajectoires. En outre, quelle que soit la voie de circulation du véhicule, la distance de décalage imposée par la commande du positionnement du véhicule permet de laisser une marge suffisante et acceptable vis-à-vis d'un autre véhicule, dépassant ou dépassé, situé dans une zone latérale adjacente à proximité du véhicule. Cette marge imposée par la distance de décalage, permet de favoriser l'acceptabilité de la conduite du véhicule en mode autonome pour l'utilisateur, tout en assurant la sécurité.

Selon un mode de réalisation particulier, on peut prévoir que, lorsque le véhicule est situé dans la voie de gauche, soit la voie adjacente au terre-plein central, ou la voie de droite, soit la vois adjacente à bande d'arrêt d'urgence, la distance de décalage du véhicule dans sa voie soit paramétrable en fonction de la vitesse du véhicule. En particulier, à basses vitesses, typiquement pour des vitesses de véhicule inférieures à environ 20 m/s, on prévoit de décaler davantage le véhicule en direction de la ligne de marquage au sol située du côté du bord de la route, autrement dit de diminuer la distance de décalage à maintenir par rapport à cette ligne. Cette stratégie permet de laisser un passage plus conséquent pour la remontée des motards par exemple.

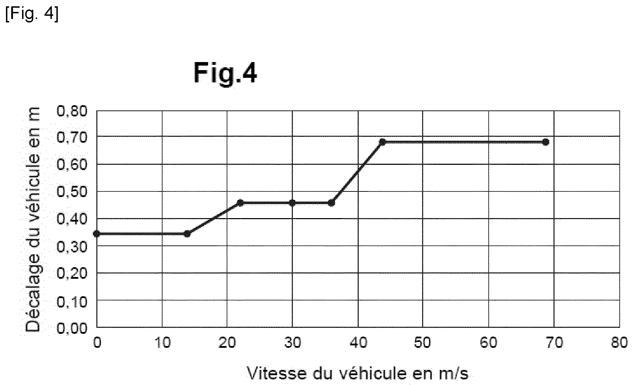

La figure 4 illustre un exemple de commande du positionnement du véhicule dans sa voie de circulation en fonction de la vitesse du véhicule. Dans cet exemple, le véhicule présente une largeur égale à 2,128 m et circule dans la voie de gauche, ladite voie comprenant une largeur de 3,50 m. On dispose donc d'une distance de sécurité égale à 1,372 m. Selon cet exemple, pour des vitesses de véhicule inférieures à 20m/s, la distance de décalage du véhicule vis-à-vis de ligne de marquage au sol délimitant latéralement la voie à gauche est fixée à 1/4 de la distance de sécurité, soit 0,34 m, puis, pour des vitesses comprises entre sensiblement 20 m/s et 40 m/s, cette distance de décalage est augmentée à 1/3 de la distance de sécurité, soit 0,46 m et enfin, pour des vitesses supérieures à 40 m/s, on fixe cette distance de décalage à la moitié de la distance de sécurité, soit 0,69 m selon l'exemple.

## Revendications

1. Procédé de commande du positionnement d'un véhicule automobile (10) circulant sur une route (1) comprenant plusieurs voies de circulation (11, 12, 13) délimitées latéralement par des lignes de marquage au sol (16), le procédé comprenant les étapes suivantes :
recevoir un signal issu d'au moins une caméra (20) équipant le véhicule,
analyser ledit signal généré par la caméra pour détecter lesdites lignes de marquage au sol,
identifier, selon une classification prédéfinie des types de lignes de marquage au sol, le type des lignes de marquage au sol détectées qui délimitent latéralement la voie de circulation courante du véhicule,
déterminer des caractéristiques de la voie de circulation courante du véhicule en fonction de l'identification du type des lignes de marquage au sol qui la délimitent et,
si la voie de circulation courante a pour caractéristique d'être parmi au moins une voie de circulation la plus à gauche (13) et une voie de circulation la plus à droite (11) pour un observateur tourné selon le sens de circulation du véhicule,
commander le positionnement du véhicule dans sa voie de circulation courante de manière à décaler le véhicule en direction du bord distal (14, 15) de la route par rapport à l'axe central de la voie de circulation du véhicule,
où le procédé comprend en outre une étape consistant à maintenir une distance de décalage (D) entre le véhicule (10) et la ligne de marquage au sol détectée et située du côté distal de la route, le procédé étant **caractérisé en ce que** ladite distance de décalage (D) est paramétrable en fonction de la vitesse du véhicule.

2. Procédé selon la revendication 1, **caractérisé en ce que** si la voie de circulation courante a pour caractéristique d'être une voie de circulation centrale (12), il comprend une étape de commander le positionnement du véhicule dans sa voie de circulation de manière à centrer le véhicule par rapport à l'axe central de la voie de circulation du véhicule.

3. Procédé selon la revendication 1, **caractérisé en ce que** ladite distance de décalage (D) est diminuée à basses vitesses, de préférence pour des vitesses du véhicule inférieures ou égales à environ 20 m/s.

4. Procédé selon l'une quelconque des revendications 1 à 3, **caractérisé en ce que** ladite distance de décalage (D) est égale à une fraction d'une distance de sécurité définie par la différence entre la largeur (L) de la voie de circulation courante du véhicule et la largeur (I) du véhicule.

5. Procédé selon la revendication 4, **caractérisé en ce que** la largeur de la voie de circulation courante du véhicule est déterminée en fonction de la position relative des lignes de marquage au sol détectées qui la délimitent latéralement.

6. Procédé selon l'une quelconque des revendications précédentes, **caractérisé en ce que** la classification prédéfinie des types de lignes de marquage au sol inclut des informations sur la nature continue ou discontinue des traits constituant les lignes de marquage au sol, sur la longueur des traits et sur l'intervalle entre les traits.

7. Dispositif de commande du positionnement d'un véhicule automobile circulant sur une route comprenant plusieurs voies de circulation délimitées latéralement par des lignes de marquage au sol, **caractérisé en ce qu'**il comprend une interface d'entrée adaptée à être couplée à au moins une caméra équipant le véhicule et au moins une unité de traitement adaptée à mettre en œuvre les étapes du procédé selon l'une quelconque des revendications précédentes.

8. Véhicule automobile **caractérisé en ce qu'**il comprend au moins une caméra et un dispositif selon la revendication 7.

## Patentansprüche

1. Verfahren zur Steuerung der Positionierung eines Kraftfahrzeugs (10), das auf einer Fahrbahn (1) fährt, die mehrere Verkehrsspuren (11, 12, 13) beinhaltet, die durch Markierungslinien auf dem Boden (16) seitlich begrenzt werden, wobei das Verfahren die folgenden Schritte beinhaltet:
Empfangen eines Signals, das von mindestens einer Kamera (20) ausgegeben wird, mit der das Fahrzeug ausgerüstet ist,
Analysieren des durch die Kamera erzeugten Signals, um die Markierungslinien auf dem Boden zu detektieren,
Identifizieren, gemäß einer vordefinierten Klassifizierung der Arten von Markierungslinien auf dem Boden, der Art der detektierten Markierungslinien auf dem Boden, die die aktuelle Verkehrsspur des Fahrzeugs seitlich begrenzen,
Bestimmen von Eigenschaften der aktuellen Verkehrsspur des Fahrzeugs in Abhängigkeit von der Identifizierung der Art der Markierungslinien auf dem Boden, die sie begrenzen, und
wenn die aktuelle Verkehrsspur die Eigenschaft aufweist, eine von mindestens einer Verkehrsspur, die am weitesten links liegt (13), und einer Verkehrsspur, die am weitesten rechts liegt (11), zu sein, für einen Betrachter, der in die Fahrtrichtung des Fahrzeugs blickt,
Steuern der Positionierung des Fahrzeugs auf seiner aktuellen Verkehrsspur derart, dass das Fahrzeug mit Bezug auf die Mittelachse der Verkehrsspur des Fahrzeugs in Richtung des äußeren Fahrbahnrands (14, 15) versetzt wird,
wobei das Verfahren ferner einen Schritt beinhaltet, der aus dem Beibehalten eines Versatzabstands (D) zwischen dem Fahrzeug (10) und der detektierten und sich an der äußeren Fahrbahnseite befindlichen Markierungslinie auf dem Boden besteht, wobei das Verfahren **dadurch gekennzeichnet ist, dass** der Versatzabstand (D) in Abhängigkeit von der Geschwindigkeit des Fahrzeugs parametrierbar ist.

2. Verfahren nach Anspruch 1, **dadurch gekennzeichnet, dass** es, wenn die aktuelle Verkehrsspur die Eigenschaft aufweist, eine mittlere Verkehrsspur (12) zu sein, einen Schritt des Steuerns der Positionierung des Fahrzeugs auf seiner Verkehrsspur derart beinhaltet, dass das Fahrzeug mit Bezug auf die Mittelachse der Verkehrsspur des Fahrzeugs zentriert wird.

3. Verfahren nach Anspruch 1, **dadurch gekennzeichnet, dass** der Versatzabstand (D) bei niedrigen Geschwindigkeiten, vorzugsweise bei Geschwindigkeiten des Fahrzeugs, die kleiner als oder gleich ungefähr 20 m/s sind, verringert wird.

4. Verfahren nach einem beliebigen der Ansprüche 1 bis 3, **dadurch gekennzeichnet, dass** der Versatzabstand (D) gleich einem Bruchteil eines Sicherheitsabstands ist, der durch die Differenz zwischen der Breite (L) der aktuellen Verkehrsspur des Fahrzeugs und der Breite (1) des Fahrzeugs definiert wird.

5. Verfahren nach Anspruch 4, **dadurch gekennzeichnet, dass** die Breite der aktuellen Verkehrsspur des Fahrzeugs in Abhängigkeit von der relativen Position der detektierten Markierungslinien auf dem Boden, die sie seitlich begrenzen, definiert wird.

6. Verfahren nach einem beliebigen der vorhergehenden Ansprüche, **dadurch gekennzeichnet, dass** die vordefinierte Klassifizierung der Arten von Markierungslinien auf dem Boden Informationen über die durchgezogene oder unterbrochene Beschaffenheit der Striche, die die Markierungslinien auf dem Boden bilden, über die Länge der Striche und über das Intervall zwischen den Strichen umfasst.

7. Vorrichtung zur Steuerung der Positionierung eines Kraftfahrzeugs, das auf einer Fahrbahn fährt, die mehrere Verkehrsspuren beinhaltet, die durch Markierungslinien auf dem Boden seitlich begrenzt werden, **dadurch gekennzeichnet, dass** sie eine Eingabeschnittstelle, die dazu angepasst ist, mit mindestens einer Kamera gekoppelt zu sein, mit der das Fahrzeug ausgerüstet ist, und mindestens eine Verarbeitungseinheit beinhaltet, die dazu angepasst ist, die Schritte des Verfahrens nach einem beliebigen der vorhergehenden Ansprüche umzusetzen.

8. Kraftfahrzeug, **dadurch gekennzeichnet, dass** es mindestens eine Kamera und eine Vorrichtung nach Anspruch 7 beinhaltet.

## Claims

1. Method for controlling the positioning of a motor vehicle (10) travelling on a road (1) comprising a plurality of traffic lanes (11, 12, 13) laterally delimited by ground marking lines (16), the method comprising the following steps:
receiving a signal from at least one camera (20) fitted to the vehicle,
analysing said signal generated by the camera so as to detect said ground marking lines,
identifying, in accordance with a predefined classification of the types of ground marking lines, the type of detected ground marking lines laterally delimiting the current traffic lane of the vehicle,
determining features of the current traffic lane of the vehicle on the basis of the identification of the type of ground marking lines that delimit it, and,
if the current traffic lane has the feature of being among at least a leftmost traffic lane (13) and a rightmost traffic lane (11) for an observer facing in the direction of travel of the vehicle,
controlling the positioning of the vehicle in its current traffic lane so as to shift the vehicle in the direction of the distal edge (14, 15) of the road with respect to the central axis of the traffic lane of the vehicle,
wherein the method furthermore comprises a step of maintaining an offset distance (D) between the vehicle (10) and the detected ground marking line located on the distal side of the road, the method being **characterized in that** said offset distance (D) is settable on the basis of the speed of the vehicle.

2. Method according to Claim 1, **characterized in that**, if the current traffic lane has the feature of being a central traffic lane (12), it comprises a step of controlling the positioning of the vehicle in its traffic lane so as to center the vehicle with respect to the central axis of the traffic lane of the vehicle.

3. Method according to Claim 1, **characterized in that** said offset distance (D) is reduced at low speeds, preferably for speeds of the vehicle less than or equal to around 20 m/s.

4. Method according to any one of Claims 1 to 3, **characterized in that** said offset distance (D) is equal to a fraction of a safety distance defined by the difference between the width (L) of the current traffic lane of the vehicle and the width (1) of the vehicle.

5. Method according to Claim 4, **characterized in that** the width of the current traffic lane of the vehicle is determined on the basis of the relative position of the detected ground marking lines that laterally delimit it.

6. Method according to any one of the preceding claims, **characterized in that** the predefined classification of the types of ground marking lines includes information about the continuous or discontinuous nature of the line segments forming the ground marking lines, about the length of the line segments and about the interval between the line segments.

7. Device for controlling the positioning of a motor vehicle travelling on a road comprising a plurality of traffic lanes laterally delimited by ground marking lines, **characterized in that** it comprises an input interface designed to be coupled to at least one camera fitted to the vehicle and at least one processing unit designed to implement the steps of the method according to any one of the preceding claims.

8. Motor vehicle, **characterized in that** it comprises at least one camera and a device according to Claim 7.
